(19) Europäisches Patentamt
European Patent Office
Office européen des brevets

(11) **EP 2 654 923 B1**

(12) **EUROPÄISCHE PATENTSCHRIFT**

(45) Veröffentlichungstag und Bekanntmachung des Hinweises auf die Patenterteilung:
**05.02.2020  Patentblatt 2020/06**

(21) Anmeldenummer: **11804668.9**

(22) Anmeldetag: **19.12.2011**

(51) Int Cl.:
**B01D 53/00** (2006.01)     **B01D 53/44** (2006.01)
**F23G 7/06** (2006.01)

(86) Internationale Anmeldenummer:
**PCT/EP2011/073169**

(87) Internationale Veröffentlichungsnummer:
**WO 2012/084767 (28.06.2012 Gazette 2012/26)**

(54) **VERFAHREN ZUR THERMISCHEN NACHVERBRENNUNG VON ABGASEN AUS DER ACROLEIN- UND AUS DER BLAUSÄUREHERSTELLUNG**

METHOD FOR THERMALLY AFTER-BURNING WASTE GASES FROM ACROLEIN AND HYDROCYANIC ACID PRODUCTION

PROCÉDÉ DE POST-COMBUSTION THERMIQUE DES EFFLUENTS GAZEUX PROVENANT DE LA FABRICATION D'ACROLÉINE ET D'ACIDE CYANHYDRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2010  EP 10196596**

(43) Veröffentlichungstag der Anmeldung:
**30.10.2013  Patentblatt 2013/44**

(73) Patentinhaber: **Evonik Operations GmbH**
**45128 Essen (DE)**

(72) Erfinder:
• **FINKELDEI, Caspar, Heinrich**
**63755 Alzenau (DE)**
• **ZACCHI, Pablo**
**50354 Hürth (DE)**
• **KÖRFER, Martin**
**63796 Kahl (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
EP-A1- 0 598 639      EP-A2- 1 422 476
WO-A1-2006/082224     DE-A1- 2 301 445
DE-A1- 19 624 674     DE-A1- 19 801 761

**Beschreibung**

Die Erfindung betrifft ein Verfahren zur thermischen Nachverbrennung der bei der Herstellung von Acrolein in einem Gasphasenprozess entstehenden Abgasströme und der thermischen Nachverbrennung der bei der Herstellung von Blausäure in einem Gasphasenprozess entstehenden Abgasströme.

Unter einer thermischen Nachverbrennung versteht der Fachmann die Oxidation der in einer Prozessabluft bzw. in einem Prozessabgas enthaltenen brennbaren Stoffe in einem Verbrennungsvorgang, wobei für den Verbrennungsvorgang ein Zusatzbrennstoff verwendet werden kann. Der Verbrauch an Zusatzbrennstoff, beispielsweise Erdgas oder Erdöl, hängt von der Konzentration der brennbaren Stoffe in der Prozessabluft bzw. dem Prozessabgas ab. Die thermische Nachverbrennung erfolgt typischerweise bei Temperaturen von 800 °C - 1200 °C und mit einer Verweilzeit von etwa 1-4 s.

Die thermische Nachverbrennung von Abgasen aus chemischen Herstellungsverfahren ist bereits aus der EP 1 422 476 A2 bekannt. Die technische Lehre dieses Dokuments zielt allerdings darauf ab, die bei der thermischen Nachverbrennung entstehenden Emissionen zu verringern. Bezüglich wirtschaftlicher Aspekte einer thermischen Nachverbrennung, insbesondere was die Optimierung einer thermischen Nachverbrennung unter Berücksichtigung von benötigtem Zusatzbrennstoff und Zusatzverbrennungsluft, enthält dieses Dokument jedoch keine Informationen.

Zu den Vorprodukten der Herstellung von Methionin oder Methionin Hydroxy Analog (MHA) zählen neben Methylmercaptan (Methanthiol) auch Acrolein (Propenal) und Blausäure (Cyanwasserstoff).

Die Acroleinherstellung wird hierzu heute praktisch ausnahmslos in einem Gasphasenprozess mit einem Propylen, Luft und Wasserdampfgemisch durchgeführt. Die dabei entstehenden acroleinhaltigen Dämpfe werden in einem zusätzlichen Prozess, beispielsweise durch Absorption, in die Flüssigphase überführt. Hierbei fällt ein großer Abgasstrom an, der entsorgt werden muss. Diese Entsorgung erfolgt in der Regel durch thermische Nachverbrennung [Beschrieben z.B. in: Acrolein, 1975, Dr. Alfred Hüthig Verlag GmbH, Heidelberg].

Bei der Acroleinsynthese fällt darüber hinaus noch ein Abasserstrom an, der bei der Synthese entstehende Nebenprodukte und Kondensat enthält. Dieser Abwasserstrom kann entweder biologisch abgebaut oder ebenfalls der thermischen Nachverbrennung zugeführt werden.

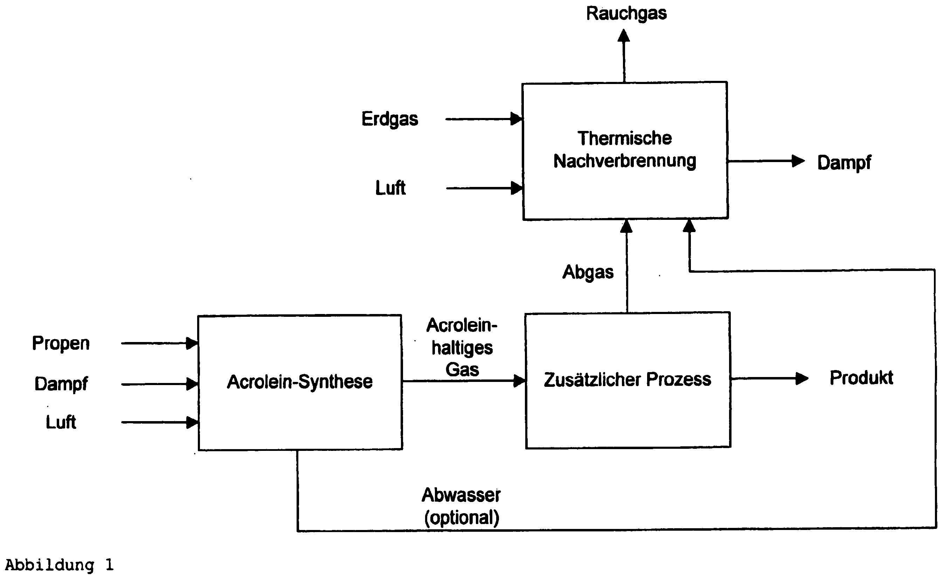

Die Acroleinherstellung ist in der Abbildung 1 schematisch dargestellt.

Dabei ist es hinsichtlich der Abgasentsorgung unerheblich, ob der zusätzliche Prozess eine klassische Absorber-Desorber-Einheit ist, in der Acrolein isoliert wird, oder ob es sich um einen Reaktivabsorber handelt, in dem Acrolein direkt in das nächste Zwischenprodukt Methylmercaptopropionaldehyd [3-(Methylthio)propanal] überführt werden kann.

Typischerweise enthält der anfallende Abwasser- und Abgasstrom bei der Acroleinherstellung folgende Inhaltsstoffe:

Tab. 1: Zusammensetzung des Abgases und des Abwassers aus der Acroleinsynthese

| Zusammensetzung [Gew%] | | |
|---|---|---|
| | AC Abwasser (optional) | AC Abgas |
| O2 | 0,0 | 6,2 |
| N2 | 0,0 | 90,0 |
| CO | 0,0 | 0,6 |
| CO2 | 0,0 | 2,2 |
| H2O | 80,8 | 0,5 |
| Brennbarer Rest (z.B. Propen, Acrolein, Acrylsäure) | 19,2 | 0,4 |

Zur thermischen Nachverbrennung von 1 Nm$^3$ des unter Tabelle 1 angegebenen Abgasstromes werden etwa 1 Nm$^3$ Luft und 0,07 Nm$^3$ Erdgas benötigt. Die dabei entstehende Wärme kann zur Dampfproduktion genutzt werden.

Nachteil der thermischen Nachverbrennung des bei der Herstellung von Acrolein anfallenden Abgasstromes ist zum einen der Verbrauch von Zusatzbrennstoff in Form von Erdgas oder alternativ Erdöl und die erforderliche Menge an Luft.

Luft besteht zu ca. 78% aus Stickstoff, wobei Stickstoff keinen Brennwert aufweist. Für die thermische Nachverbrennung des bei der Herstellung von Acrolein anfallenden Abgasstromes werden große Stickstoffmengen eingetragen, die erwärmt werden müssen und daher einen Verlust von Wärme darstellen, der nicht mehr vollständig für die Dampfproduktion zur Verfügung steht.

Wie eingangs erwähnt gehört zu den Vorprodukten der Methioninherstellung auch die Blausäure. Blausäure kann fallweise als Nebenprodukt aus anderen Verfahren bezogen werden, z. B. aus der Produktion von Acrylnitril. Häufig wird Blausäure aber auch gezielt als Vorprodukt für Methionin oder Methionin Hydroxy Analog hergestellt.

Die Blausäureherstellung erfolgt wiederum in Gasphasenprozessen, beispielsweise durch das Andrussow-Verfahren, bei denen ebenfalls ein großer zu entsorgender Abgasstrom anfällt. Auch hier erfolgt die Entsorgung in der Regel durch thermische Nachverbrennung [Chemie Ingenieur Technik (1970), 42(2), 63-72].

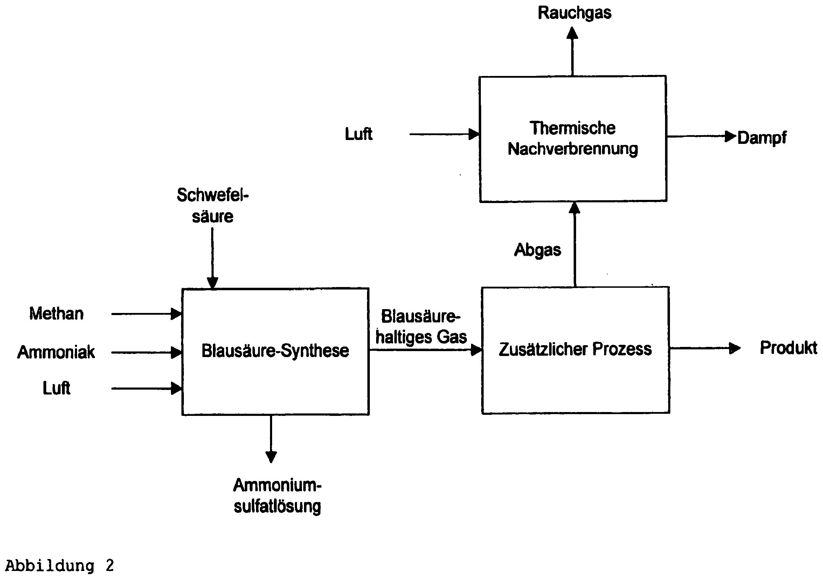

Die Blausäureherstellung ist in der Abbildung 2 schematisch dargestellt.

Dabei ist es hinsichtlich der Abgasentsorgung wiederum unerheblich, ob der zusätzliche Prozess eine klassische Absorber-Desorber-Einheit ist, in der Blausäure isoliert wird, oder ob es sich um einen Reaktivabsorber handelt, in dem Blausäure direkt in das nächste Zwischenprodukt Methylmercaptopropionaldehyd-Cyanhydrin [2-Hydroxy-4-(methylthio)butannitril] überführt werden kann.

Typischerweise enthält der bei der Blausäureherstellung anfallende Abgasstrom folgende Inhaltsstoffe:

Tab. 2: Zusammensetzung des Abgases aus der Blausäureherstellung

| Zusammensetzung [Gew%] | |
|---|---|
| | HCN Abgas |
| $O_2$ | 0,5 |
| $N_2$ | 89,1 |
| CO | 7,0 |
| $CO_2$ | 0,6 |
| $H_2O$ | 0,6 |
| Brennbarer Rest (z.B. Methan, Blausäure, Wasserstoff) | 2,1 |

Zur thermischen Nachverbrennung von 1 $Nm^3$ des unter Tabelle 2 angegebenen Abgasstromes werden ca. 0,9 $Nm^3$/h Luft benötigt. Aufgrund des relativ hohen Anteiles thermisch verwertbarer Substanzen im Abgasstrom, wie z.B. Methan oder Wasserstoff, ist eine zusätzliche Zuführung von Erdgas für die thermische Nachverbrennung des Abgases aus der Blausäureherstellung, abgesehen von einer sogenannten Stützflamme, nicht notwendig. Die bei der thermischen Nachverbrennung entstehende Wärme kann ebenfalls zur Dampfproduktion genutzt werden.

Die thermische Nachverbrennung des bei der Herstellung von Blausäure anfallenden Abgasstromes erfordert zwar keinen Zusatzbrennstoff (abgesehen von der Stützflamme), dennoch ist die erforderliche Menge an Luft von Nachteil. Luft besteht zu ca. 78% aus Stickstoff, wobei Stickstoff keinen Brennwert aufweist. Für die thermische Nachverbrennung des bei der Herstellung von Blausäure anfallenden Abgasstromes werden große Stickstoffmengen eingetragen, die erwärmt werden müssen und die daher einen Wärmeverlust für die Dampfproduktion darstellen.

Darüber hinaus sind die Abgasvolumenströme aus der Acroleinherstellung und der Blausäureherstellung jeweils relativ groß und deshalb teuer in der Entsorgung.

Aufgabe der vorliegenden Erfindung ist es daher, ein Verfahren zur thermischen Nachverbrennung von Abgasen aus der Acrolein- und aus der Blausäureherstellung zur Verfügung zur stellen, bei welchem die Nachteile des Standes der Technik zumindest verringert sind.

Diese Aufgabe wird gelöst durch ein Verfahren zur thermischen Nachverbrennung der bei der Herstellung von Acrolein in einem Gasphasenprozess entstehenden Abgasströme, die aus dem Verfahren der Gasphasenoxidation von Propylen oder Propan zu Acrolein sind, und der thermischen Nachverbrennung der bei der Herstellung von Blausäure in einem Gasphasenprozess entstehenden Abgasströme, die aus dem Andrussow-Verfahren oder dem BMA-(Blausäure aus Methan und Ammoniak)-Verfahren sind, dadurch gekennzeichnet, dass die Abgasströme aus der Herstellung von Acrolein und die Abgasströme aus der Herstellung von Blausäure einer gemeinsamen thermischen Nachverbrennung zugeführt werden, wobei die thermische Nachverbrennung der Abgasströme aus der Acroleinherstellung und aus der Blausäureherstellung in zeitlicher Übereinstimmung erfolgt.

Die Abgasströme werden damit nicht getrennt in separaten Verfahren entsorgt, sondern beide Abgasströme werden in einer einzigen thermischen Nachverbrennung behandelt. Die thermische Nachverbrennung der Abgasströme aus der Acroleinherstellung und aus der Blausäureherstellung erfolgt auch nicht zeitlich aufeinanderfolgend, sondern zeitlich parallel, d.h. in zeitlicher Übereinstimmung.

Dazu können die Abgasströme aus der Acroleinherstellung und die Abgasströme aus der Blausäureherstellung zunächst zusammengeführt und gemeinsam der thermischen Nachverbrennung zugeführt werden oder parallel jeder Abgasstrom getrennt zugeführt werden, vorausgesetzt, dass dies nicht zeitlich aufeinanderfolgend, sondern zeitlich parallel, d.h. in zeitlicher Übereinstimmung erfolgt.

In einer bevorzugten Ausführungsform des Verfahrens gemäß der vorliegenden Erfindung wird nicht nur der bei der Acroleinherstellung entstehende Abgasstrom, sondern auch der anfallende Abwasserstrom der thermischen Nachverbrennung zugeführt. Dadurch kann eine biologische Aufbereitungsstufe für das anfallende Abwasser entfallen.

Eine gemeinsame Verbrennungsanlage für beide Prozessabgase würde aufgrund von Skalierungseffekten bereits die üblichen Einsparungen beim Investment für eine solche Anlage bieten, da nicht zwei Verbrennungsanlagen, sondern nur eine einzelne, aber dafür entsprechend größer dimensionierte Verbrennungsanlage gebaut werden muss.

Völlig überraschend hat sich jedoch gezeigt, dass eine gemeinsame thermische Nachverbrennung weitere wesentliche Vorteile bringt.

Durch die gemeinsame thermische Nachverbrennung wird ein geringerer Eintrag von Luft ermöglicht. Dadurch werden geringere Mengen Stickstoff, die keinen Brennwert aufweisen, eingetragen. Es muss weniger Stickstoff aus der Luft erwärmt werden müssen, was zu einem geringeren Wärmeverlust führt. Damit steigt die Dampfproduktion bezogen auf den eingesetzten Zusatzbrennstoff.

Die Einsparung von Verbrennungsluft liegt in der Zusammensetzung der zwei Abgasströme begründet. Der Abgasstrom aus der Acroleinherstellung hat relativ wenig Brennwert, enthält aber noch signifikante Konzentrationen an Restsauerstoff (s. Tabelle 1). Der Abgasstrom aus der Blausäureherstellung enthält überschüssigen Brennwert, aber praktisch keinen Sauerstoff mehr (s. Tabelle 2). Ein Teil des für die Verbrennung des Abgases aus der Blausäureherstellung erforderlichen Sauerstoffes kann durch die gemeinsame thermische Nachverbrennung durch den Abgasstrom aus der Acroleinherstellung bereit gestellt werden. Da weniger Verbrennungsluft benötigt wird, kann bei der gemeinsamen thermischen Nachverbrennung auch ein geringeres Brennkammervolumen eingesetzt werden, als dies bei einer einfachen Zusammenlegung ohne synergistische Effekte möglich gewesen wäre.

Ein weiterer Vorteil des erfindungsgemäßen Verfahrens ist die Einsparung von Zusatzbrennstoff. Da der Abgasstrom aus der Blausäureherstellung überschüssigen Brennwert enthält, ersetzt der Abgasstrom aus der Blausäureherstellung zumindest teilweise die Zuführung von Zusatzbrennstoff

Bevorzugt zeichnet sich das erfindungsgemäße Verfahren dadurch aus, dass die bei der Herstellung von Blausäure in einem Gasphasenprozess entstehenden Abgasströme, Abgasströme aus dem Andrussow Verfahren sind. Das Andrussow Verfahren ist dem Fachmann bekannt und beispielsweise in Ullmann's Encyclopedia of Industrial Chemistry, sixth Edition, Volume 10, page 194 beschrieben. In einer weiteren bevorzugten Ausführungsform des erfindungsgemäßen Verfahrens sind die bei der Herstellung von Blausäure in einem Gasphasenprozess entstehenden Abgasströme, Abgasströme aus dem BMA (Blausäure aus Methan und Ammoniak) Verfahren. Auch dieses Verfahren ist dem Fachmann bekannt und beispielsweise auch in Ullmann's Encyclopedia of Industrial Chemistry, sixth Edition, Volume 10, page 194 beschrieben.

Bevorzugt zeichnet sich das erfindungsgemäße Verfahren auch dadurch aus, dass die bei der Herstellung von Acrolein in einem Gasphasenprozess entstehenden Abgasströme, Abgasströme aus der Gasphasenoxidation von Propylen zu Acrolein sind.

Ebenfalls bevorzugt zeichnet sich das erfindungsgemäße Verfahren auch dadurch aus, dass die bei der Herstellung von Acrolein in einem Gasphasenprozess entstehenden Abgasströme, Abgasströme aus der Gasphasen-Partialoxidation von Propan zu Acrolein sind.

Besonders bevorzugt ist es, dass die Abgasströme aus der Acroleinherstellung und der Blausäureherstellung in guter zeitlicher Übereinstimmung auftreten, so dass die Vorteile der gemeinsamen Verbrennung umfangreich genutzt werden können, ohne dass dafür ein Zwischenspeicher für die Abgasströme notwendig ist. Das erfindungsgemäße Verfahren zeichnet sich daher bevorzugt dadurch aus, dass die Herstellung von Acrolein und die Herstellung von Blausäure zeitlich parallel stattfinden und damit die Abgasströme aus der Herstellung von Acrolein und der Herstellung von Blausäure ebenfalls zeitlich parallel anfallen.

Zur optimalen Nutzung der Vorteile einer gemeinsamen Entsorgung der Prozessabgase ist die Errichtung und der Betrieb an einem gemeinsamen Standort (Verbundstandort) besonders bevorzugt. Das erfindungsgemäße Verfahren zeichnet sich daher weiterhin bevorzugt dadurch aus, dass die Herstellung von Acrolein und die Herstellung von Blausäure an einem Standort stattfinden und damit die Abgasströme aus der Herstellung von Acrolein und der Herstellung von Blausäure ebenfalls an einem Standort anfallen. Der Transport der Abgasströme ist dadurch minimiert und die Abgasströme können direkt der thermischen Nachverbrennung zugeführt werden.

In einer ganz besonders bevorzugten Ausführungsform des erfindungsgemäßen Verfahrens fallen die Abgasströme aus der Acroleinherstellung und der Blausäureherstellung in guter zeitlicher Übereinstimmung, d.h. zeitlich parallel und an einem Standort an.

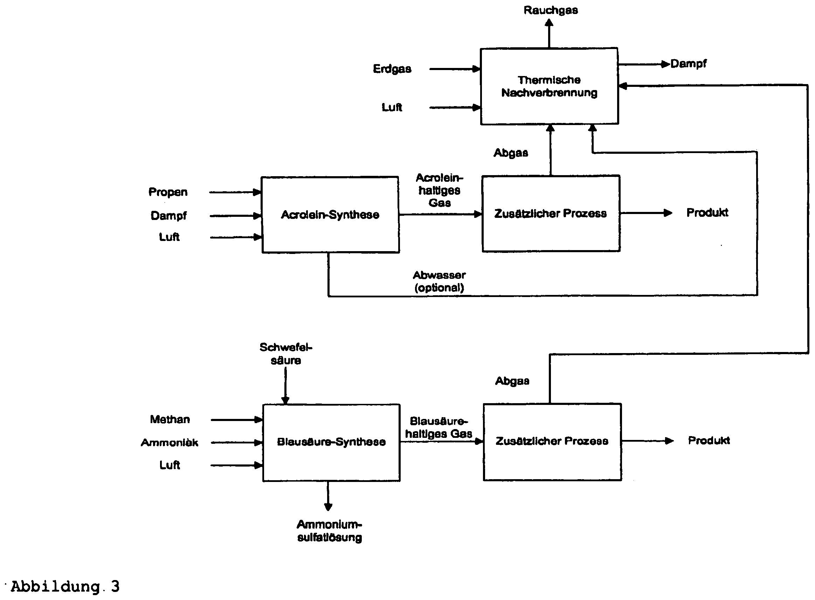

In der Abbildung 3 ist diese besonders bevorzugte Ausführungsform des erfindungsgemäßen Verfahrens schematisch dargestellt.

In Abbildung 3 ist die Verbrennung von Abwasser aus der Acroleinherstellung mit angegeben. Das ist optional. Die Vorteile des erfindungsgemäßen Verfahrens treten auch dann auf, wenn das Abwasser des Acrolein-Prozesses getrennt von der thermischen Nachverbrennung entsorgt wird, beispielsweise in einer biologischen Abwasserbehandlung.

Weitere Optionen betreffen den in Abbildung 3 mit "Zusätzlicher Prozess" bezeichneten Prozessschritt. Im Sinne der Erfindung ist es unerheblich, ob dieser zusätzliche Prozess eine klassische Absorber-Desorber-Einheit ist, in der Acrolein bzw. Blausäure isoliert wird, oder ob es sich um einen Reaktivabsorber handelt, in dem Acrolein bzw. Blausäure direkt in das nächste Zwischenprodukt überführt werden kann.

Insbesondere bei der Verwendung von Acrolein und Blausäure als Vorprodukte für die chemische Synthese von Methionin oder Methionin Hydroxy Analog (MHA) lässt sich das erfindungsgemäße Verfahren besonders vorteilhaft einsetzen.

Die Vorprodukte Acrolein und Blausäure sind über das Endprodukt Methionin oder Methionin Hydroxy Analog (MHA) miteinander gekoppelt. Die Acroleinherstellung und die Blausäureherstellung erfolgt hier parallel an einem gemeinsamen Standort, damit fallen die Abgasströme aus der Acroleinherstellung und aus der Blausäureherstellung auch zeitlich parallel an.

Hinzu kommt, dass sich aufgrund der Stöchiometrie der Methioninsynthese für die Edukte Acrolein und Blausäure Mengenströme und damit auch Abgasströme ergeben, die sich in günstiger Weise im Hinblick auf gemeinsame thermische Nachverbrennung ergänzen.

Das erfindungsgemäße Verfahren ist daher bevorzugt dadurch gekennzeichnet, dass die thermische Nachverbrennung im Rahmen eines integrierten Verfahrens zur chemischen Synthese von Methionin oder Methionin Hydroxy Analog (MHA) durchgeführt wird.

Die Vorteile der vorliegenden Erfindung werden an dem folgenden Ausführungsbeispiel näher erläutert.

Bei der Herstellung von Acrolein (ca. 8 t/h) durch Gasphasenoxidation von Propylen zu Acrolein fällt ein Abwasser- und Abgasstrom mit folgenden Inhaltsstoffen und Mengen an:

Tab. 3: Zusammensetzung und Massenstrom des Abgases und des Abwassers aus der Acroleinsynthese.

| Massenstrom [kg/h] | | |
|---|---|---|
| | AC Abwasser (optional) | AC Abgas |
| $O_2$ | 0 | 1850 |
| $N_2$ | 0 | 26988 |
| CO | 0 | 180 |
| $CO_2$ | 0 | 674 |
| $H_2O$ | 5630 | 149 |
| Brennbarer Rest (z.B. Propen, Acrolein, Acrylsäure) | 1335 | 132 |
| | 6965 | 29974 |

Zur thermischen Nachverbrennung des unter Tabelle 3 angegebenen Abgasstromes wurden ca. 29550 Nm$^3$/h Luft und 1929 Nm$^3$/h Erdgas benötigt. Die dabei entstehende Wärme wurde zur Dampfproduktion genutzt, wobei bei den eingesetzten Mengen ca. 31 t/h Dampf (20bar) produziert wurden.

Bei der Herstellung von Blausäure (ca. 4 t/h) in einem Gasphasenprozess nach dem Andrussow Verfahren fällt ein Abgasstrom mit folgenden Inhaltsstoffen und Mengen an:

Tab. 4: Zusammensetzung des Abgases aus der Blausäureherstellung

| Massenstrom [kg/h] | |
|---|---|
| | HCN Abgas |
| $O_2$ | 152 |
| $N_2$ | 27075 |
| CO | 2120 |
| $CO_2$ | 197 |
| $H_2O$ | 186 |
| Brennbarer Rest (z.B. Methan, Blausäure, Wasserstoff) | 646 |
| | 30376 |

Zur thermischen Nachverbrennung des unter Tabelle 4 angegebenen Abgasstromes wurden ca. 27365 Nm$^3$/h Luft benötigt. Aufgrund der im Abgasstrom enthaltenen thermisch verwertbarer Substanzen, wie z.B. Methan oder Wasserstoff, war eine zusätzliche Zuführung von Erdgas für die thermische Nachverbrennung des Abgases aus der Blausäureherstellung nicht notwendig. Die bei der thermischen Nachverbrennung entstehende Wärme wurde zur Dampfproduktion genutzt, wobei bei den eingesetzten Mengen ca. 29,4 t/h Dampf (20bar) produziert werden konnten.

Die gesamten Inhaltsstoffe und Mengenströme, die der gemeinsamen Nachverbrennung gemäß der vorliegenden Erfindung zugeführt wurden sind in Tabelle 5 dargestellt.

Tab. 5: Gesamtheit der gemeinsamen thermischen Nachverbrennung zugeführte Abgas- und Abwasserströme.

| | Massenstrom [kg/h] | | |
|---|---|---|---|
| | AC Abwasser (optional) | AC Abgas | HCN Abgas |
| O2 | 0 | 1850 | 152 |
| N2 | 0 | 26988 | 27075 |
| CO | 0 | 180 | 2120 |
| CO2 | 0 | 674 | 197 |
| H2O | 5630 | 149 | 186 |
| Brennbarer Rest (z.B. Propen, Acrolein, Acrylsäure, Methan, Blausäure, Wasserstoff) | 1335 | 132 | 646 |
| | 6965 | 29974 | 30376 |

Die thermische Verbrennung erfolgte in jedem Fall mit einem Restsauerstoffgehalt von 3 Vol%. Die Verweilzeit betrug jeweils ca. 2 s. Eine Feedgasvorwärmung erfolgte nicht. Unter Feedgas sind alle Gase, die der thermischen Nachverbrennung zugeführt werden zu verstehen, d.h. nicht nur die Prozessabgase, sondern auch die Verbrennungsluft und der Zusatzbrennstoff. Die Verbrennungstemperatur betrug ca. 1130 °C im Fall der Verbrennung des Abgases aus der Blausäureherstellung (Tab. 4). In den beiden anderen Fällen (Tab. 3 und Tab. 5) betrug die Verbrennungstemperatur übereinstimmend 950 °C.

Zur gemeinsamen thermischen Nachverbrennung der unter Tabelle 5 angegebenen Abwasser- und Abgasströme wurden ca. 46406 $Nm^3$/h Luft benötigt.

Für die getrennte thermische Nachverbrennung wurden die folgende Menge Verbrennungsluft benötigt:

$$27365 \text{ Nm}^3/\text{h} + 29550 \text{ Nm}^3/\text{h} = 56915 \text{ Nm}^3/\text{h}$$

Die gemeinsame Verbrennung dieser beiden Prozessabgase ermöglicht nachweislich eine Reduzierung der benötigten Verbrennungsluft um 18,5 %.

Zur gemeinsamen thermischen Nachverbrennung der unter Tabelle 5 angegebenen Abwasser- und Abgasströme wurden weiterhin ca. 1158 $Nm^3$/h Erdgas benötigt

Für die getrennte thermische Nachverbrennung wurde 1929 $Nm^3$/h Erdgas benötigt.

Die gemeinsame Verbrennung dieser beiden Prozessabgase ermöglicht eine Reduzierung der benötigten Erdgasmenge um 40 %. Das entspricht einer Einsparung von ca. 200 $Nm^3_{CH4}$/$t_{HCN}$ in den im vorliegenden Ausführungsbeispiel offenbarten Stoffströmen.

Die Dampfproduktion betrug 51,1 t/h

Mit dem erfindungsgemäßen Verfahren lassen sich die nachfolgend genannten Vorteile nutzen:

1. Skalierungseffekte aufgrund der Errichtung und des Betriebs von einer gemeinsamen Entsorgungseinrichtung, anstatt üblicherweise zwei.

2. Darüber hinausgehende Vorteile der gemeinsamen Verbrennung der Prozessgase aus Acrolein und Blausäure sind:

    a. Verringerter Rauchgasvolumenstrom
    b. Verringerte Größe der Entsorgungseinrichtung, so dass sich das Investment über den o. g. Skalierungseffekt hinaus reduziert
    c. Verringerter Brennstoffverbrauch
    d. Verringerte Gebläseleistung für die Verbrennungsluft
    e. Verringerter CO2-Ausstoß
    f. Vermeidung von möglicherweise überschüssigem Prozessdampf.

**Patentansprüche**

1. Verfahren zur thermischen Nachverbrennung der bei der Herstellung von Acrolein in einem Gasphasenprozess entstehenden Abgasströme, wobei die Abgasströme aus dem Verfahren der Gasphasenoxidation von Propylen oder Propan zu Acrolein sind, und der thermischen Nachverbrennung der bei der Herstellung von Blausäure in einem Gasphasenprozess entstehenden Abgasströme, wobei die Abgasströme aus dem Andrussow-Verfahren oder dem BMA -(Blausäure aus Methan und Ammoniak)-Verfahren sind, **dadurch gekennzeichnet, dass** die Abgasströme aus der Herstellung von Acrolein und die Abgasströme aus der Herstellung von Blausäure einer gemeinsamen thermischen Nachverbrennung zugeführt werden, wobei die thermische Nachverbrennung der Abgasströme aus der Acroleinherstellung und aus der Blausäureherstellung in zeitlicher Übereinstimmung erfolgt.

2. Verfahren nach Anspruch 1, **dadurch gekennzeichnet, dass** die Herstellung von Acrolein und die Herstellung von Blausäure zeitlich parallel stattfinden und damit die Abgasströme aus der Herstellung von Acrolein und der Herstellung von Blausäure ebenfalls zeitlich parallel anfallen.

3. Verfahren nach Anspruch 1, **dadurch gekennzeichnet, dass** die Herstellung von Acrolein und die Herstellung von Blausäure an einem Standort stattfinden und damit die Abgasströme aus der Herstellung von Acrolein und der Herstellung von Blausäure ebenfalls an einem Standort anfallen.

4. Verfahren nach Anspruch 1 oder 2, **dadurch gekennzeichnet, dass** die thermische Nachverbrennung im Rahmen eines integrierten Verfahrens zur chemischen Synthese von Methionin oder Methionin-Hydroxy-Analog (MHA) durchgeführt wird.

**Claims**

1. Process for the thermal afterburning of the exhaust gas streams that are formed in the production of acrolein in a gas-phase process, wherein the exhaust gas streams are from the process of gas-phase oxidation of propylene or propane to acrolein, and the thermal afterburning of the exhaust gas streams that are formed in the production of prussic acid in a gas-phase process, wherein the exhaust gas streams are from the Andrussow process or the BMA (prussic acid from methane and ammonia) process, **characterized in that** the exhaust gas streams from the production of acrolein and the exhaust gas streams from the production of prussic acid are fed to a shared thermal afterburning, wherein the thermal afterburning of the exhaust gas streams from the production of acrolein and from the production of prussic acid proceeds concurrently with respect to time.

2. Process according to Claim 1, **characterized in that** the production of acrolein and the production of prussic acid take place in parallel with respect to time, and therefore the exhaust gas streams from the production of acrolein and the production of prussic acid likewise arise in parallel with respect to time.

3. Process according to Claim 1, **characterized in that** the production of acrolein and the production of prussic acid take place at one location and therefore the exhaust gas streams from the production of acrolein and the production of prussic acid likewise arise at one location.

4. Process according to Claim 1 or 2, **characterized in that** the thermal afterburning is carried out in the context of an integrated process for chemical synthesis of methionine or methionine hydroxy analogue (MHA).

**Revendications**

1. Procédé pour la post-combustion thermique des effluents gazeux formés lors de la préparation d'acroléine dans un procédé en phase gazeuse, les effluents gazeux provenant du procédé d'oxydation en phase gazeuse du propène ou du propane en acroléine, et de la post-combustion thermique des effluents gazeux formés lors de la préparation d'acide cyanhydrique dans un procédé en phase gazeuse, les effluents gazeux provenant du procédé d'Andrussow ou du procédé BMA (Blausäure aus Methan und Ammoniak - acide cyanhydrique à partir de méthane et d'ammoniac), **caractérisé en ce que** les effluents gazeux provenant de la préparation d'acroléine et les effluents gazeux provenant de la préparation d'acide cyanhydrique sont alimentés à une post-combustion thermique commune, la post-combustion thermique des effluents gazeux provenant de la préparation d'acroléine et provenant de la préparation d'acide cyanhydrique coïncidant dans le temps.

2. Procédé selon la revendication 1, **caractérisé en ce que** la préparation d'acroléine et la préparation d'acide cyanhydrique ont lieu en parallèle dans le temps et ainsi, les effluents gazeux provenant de la préparation d'acroléine et provenant de la préparation d'acide cyanhydrique sont également produits en parallèle dans le temps.

3. Procédé selon la revendication 1, **caractérisé en ce que** la préparation d'acroléine et la préparation d'acide cyanhydrique ont lieu dans un seul endroit et ainsi, les effluents gazeux provenant de la préparation d'acroléine et provenant de la préparation d'acide cyanhydrique sont également produits en un seul endroit.

4. Procédé selon la revendication 1 ou 2, **caractérisé en ce que** la post-combustion thermique est réalisée dans le cadre d'un procédé intégré pour la synthèse chimique de la méthionine ou de la méthionine hydroxy-analogue (MHA).

Abbildung 1

Abbildung 2

Abbildung. 3

## IN DER BESCHREIBUNG AUFGEFÜHRTE DOKUMENTE

**In der Beschreibung aufgeführte Patentdokumente**

- EP 1422476 A2

**In der Beschreibung aufgeführte Nicht-Patentliteratur**

- **DR. ALFRED.** Acrolein. Hüthig Verlag GmbH, 1975
- *Chemie Ingenieur Technik,* 1970, vol. 42 (2), 63-72
- Ullmann's Encyclopedia of Industrial Chemistry. vol. 10, 194